# EUROPÄISCHE PATENTSCHRIFT

(11) **EP 1 538 424 B1**
(45) Veröffentlichungstag und Bekanntmachung des Hinweises auf die Patenterteilung: **26.09.2007**
(21) Anmeldenummer: 03027923.6
(22) Anmeldetag: 04.12.2003
(51) Int. Cl.: G01D 5/48, H02K 29/06

(54) **Mikrowellenwegmesssystem für elektrodynamischen Direktantrieb**
Microwave based position measurement system for an electrodynamic direct drive
Dispositif de mesure de position à micro-ondes pour un entraînement direct électrodynamique

(43) Veröffentlichungstag der Anmeldung: 08.06.2005
(73) Patentinhaber: Festo AG & Co., 73734 Esslingen (DE)
(72) Erfinder: Hartramph, Ralf, Dr.-Ing., 73095 Albershausen (DE); Finkbeiner, Matthias, Dipl.-Ing., 71159 Mötzingen (DE); Reininger, Thomas, Dr.rer.nat., 73249 Wernau (DE)
(74) Vertreter: Vetter, Hans

(56) Entgegenhaltungen:
- DE-A- 19 712 374
- US-A- 5 257 014
- US-B1- 6 445 193

## Beschreibung

Die Erfindung betrifft einen elektrodynamischen Direktantrieb, insbesondere einen Linearantrieb, mit einem innerhalb eines Gehäuses verfahrbaren Läufer, der relativ zum Gehäuse durch ein Antriebssystem bewegbar ist, welches zwei antriebsmäßig zusammenwirkende, relativ zueinander bewegbare Antriebsmittel in Gestalt eines mindestens eine Spule enthaltenden Spulensystems und mindestens einen Permanentmagnet enthaltenden Magnetsystems aufweist, um einen mit dem Läufer gekoppelten Lastmitnehmer zu bewegen.

Die DE 19853942 C1 zeigt einen gattungsgemäßen Linearantrieb mit einem Gehäuse, das einen Aufnahmeraum begrenzt, in dem Antriebsmittel angeordnet sind. Die Antriebsmittel sind Bestandteil eines elektrischen Linearmotors, der als patronenartige Einheit in den Aufnahmeraum eingesetzt und gehäusefest fixiert ist. Das Gehäuse begrenzt dabei den langgestreckten Aufnahmeraum, innerhalb dessen die Antriebsmittel vorgesehen sind. Durch elektrische Energiezufuhr lässt sich der Läufer innerhalb des Aufnahmeraums entlang der Längsachse bewegen. Mit dem Läufer ist ein Lastmitnehmer verbunden, an dem ein zu bewegendes Bauteil befestigt ist. Das durch den Linearmotor bzw. Linearantrieb zu bewegende Bauteil kann beispielsweise ein Führungsschlitten einer Werkzeugmaschine sein.

Aus der DE 20113014 U1 ist ein elektrodynamischer Lineardirektantrieb bekannt. Dieser Lineardirektantrieb weist ein langgestrecktes Gehäuse mit einem sich in Längsrichtung des Gehäuses erstreckenden Aufnahmeraum auf. Innerhalb des Gehäuses ist ein langgestreckter Stator in Form einer hohl ausgebildeten Trägerrohr angeordnet, auf dem ringförmig ausgebildete Permanentmagnete koaxial aufeinanderfolgend angeordnet sind. Um als Rückschlussrichtung zu wirken, kann der langgestreckte Stator aus magnetisch leitfähigem Material bestehen, insbesondere aus weichmagnetischem Material. Auf diesem Stator beweglich angeordnet ist der mit einer Spulenwicklung versehene Läufer. Bei Bestromung der Spule des Läufers lässt sich der Läufer relativ zum Stator in Längsrichtung zum Gehäuse bewegen und nimmt dabei über den Lastmitnehmer das zu bewegende Bauteil mit.

Für die elektrische Steuerung bzw. Regelung des elektrodynamischen Direktantriebs ist es wichtig, die Position des Läufers und damit auch des über den Lastmitnehmer daran befestigten Bauteils zu kennen. Bisher wird dazu für den Läufer ein relativer Nullpunkt festgelegt, bezüglich dem die absolute Position des Läufers im Arbeitsbetrieb bestimmt wird. Derartige Messverfahren sind zeitaufwendig und erfordern den Einsatz zusätzlichen Personals, da die Position des Läufers immer wieder bezüglich des Nullpunkts nachgestellt oder geeicht werden muss.

In US 5257014 A1 wird ein gattungsgemäßer Linearantrieb offenbart, mit einem zylindrischen Gehäuse, welches eine Antriebsspule und einen in der Spule beweglichen Läufer umfasst. Das durch die Antriebsspule erzeugte magnetische Feld ist mit einem Magnetfeldsensor erfassbar, dessen Ausgangssignal ein Maß für die Position des Läufers ist.

Es wurden bisher auch schon verschiedene Wegmessverfahren ausprobiert, die eine automatische Wegmessung des Läufers gegenüber dem Gehäuse ermöglichen, wobei der Einsatz von Wegmessungen aufgrund elektromagnetischer Wellen, wie Mikrowellen, Radarwellen oder Ähnliches, bisher nicht in Frage kam, da die Spulen und Permanentmagnete innerhalb des Gehäuses eine magnetisch leitfähige Oberfläche besitzen, an denen die elektromagnetischen Wellen entlanglaufen und daher eine Wegmessung unmöglich machen oder erheblich stören.

Aus der WO 99/31463 sind eine Abstandsmessvorrichtung und ein Verfahren zur Bestimmung des Abstands eines Kolbens innerhalb eines Zylinders beschrieben. Die Abstandsmessvorrichtung weist als Sensor beispielsweise auch einen Mikrowellensensor auf, der aufgrund der Reflexion der Mikrowellen die Position des Kolbens bestimmen kann. Im Unterschied zu elektrodynamischen Lineardirektantrieben besitzt die Oberfläche von Zylinder und Kolben bereits per se eine Oberfläche, die die elektromagnetischen Wellen nicht derart beeinflusst, dass eine exakte Messung nicht durchführbar ist. Der Zylinder an der Innenseite ist beispielsweise aus einem elektrisch leitfähigen Material oder aus einem Kunststoff, so dass eine Messung mit elektromagnetischer Strahlung ohnehin funktioniert. Sobald aber wie beim elektrodynamischen Direktantrieb magne-tisch leitende Oberflächen ins Spiel kommen, ist bisher eine derartige Wegmessung nicht möglich.

Es ist Aufgabe der vorliegenden Erfindung, einen elektrodynamischen Direktantrieb mit einem alternativen Wegmesssystem bereitzustellen, welches auf einfache Weise am Direktantrieb anzubringen ist und einen erheblichen wirtschaftlichen Vorteil mit sich bringt, da die absolute Position des Läufers elektronisch im Steuerungs- bzw. Regelungssystem weiterverarbeitet werden kann.

Diese Aufgabe wird durch die Merkmale des unabhängigen Anspruchs 1 gelöst. Danach ist ein Wegmessraum durch eine Endfläche des verfahrbaren Läufers und die Wände des Gehäuses und/oder die Oberfläche der innenliegenden Antriebsmittel gebildet und ein Sensor erfasst die Position des Läufers innerhalb des Gehäuses mittels elektromagnetischer Wellen, wobei die Entfernung des Läufers zum Sensor aufgrund der Laufzeit von elektromagnetischen Wellen messbar ist und die Endfläche des Läufers und die Innenflächen des Wegmessraums ein elektrisch leitfähiges Oberflächenmaterial aufweisen, um eine Reflexionsfläche für eine optimale Messfunktion des Mikrowellensensors zu gewährleisten.

Das erfindungsgemäße Mikrowellenwegmesssystem lässt sich bevorzugt bei elektrodynamischen Lineardirektantriebs-Motoren verwenden, ist jedoch nicht auf diese beschränkt. Beispielsweise können auch elektrodynamische Direktantriebs-Motoren eingesetzt werden, wo der Läufer nicht in linearer Richtung, sondern entsprechend einer krummlinigen Bahn bewegbar ist. Entscheidend dabei ist lediglich, dass die Antriebsmittel ein Spulensystem und ein dazu elektromagnetisch koppelndes Magnetsystem aufweisen. Bezogen auf den Lineardirektantrieb sind dabei meist mehrere, koaxial aufeinanderfolgende Spulen im Spulensystem enthalten, und ein permanentmagnetischer Läufer bewegt sich relativ gegenüber dem durch das Spulensystem vorgegebenen Stator. Andererseits kann aber auch das Spulensystem auf dem Läufer angeordnet sein, und der Stator ist durch mehrere, koaxial aufeinanderfolgende Permanentmagnete gebildet.

Beide alternativen Antriebssysteme sind bevorzugt jeweils innerhalb eines Gehäuses gekapselt, und zwischen einer Endfläche des Läufers und einer endseitigen Gehäusewand ist ein Wegmessraum ausgebildet. Erfindungsgemäß ist nun der durch das Gehäuse selbst oder die Antriebsmittel und die Endflächen des Gehäuses bzw. die Endflächen des Läufers begrenzte Wegmessraum durch eine elektrisch leitfähige Oberfläche gekennzeichnet. Vor allem dort, wo magnetisch leitfähige Materialien angeordnet sind, ist eine Reflexionsfläche vorgesehen, die elektrisch leitfähig ausgebildet ist. Durch diese Reflexionsfläche werden etwa vom Mikrowellensensor ankommende Mikrowellen nicht in der Oberfläche eingekoppelt, sondern zurück in den Wegmessraum reflektiert. Dadurch treten keine oder nur geringe Messstörungen auf.

Die Reflexionsfläche kann auf unterschiedliche Art und Weise bereitgestellt werden. Es kann sich dabei um ein elektrisch leitfähiges Metallrohr handeln, das auf der Innenseite des Gehäuses oder auf dem Antriebsmittel bzw. innerhalb des Antriebsmittels eingesetzt ist. Das elektrisch leitfähige Metallrohr hat dabei zwei Funktionen, denn es dient einerseits als Gleitfläche für den Läufer und andererseits als elektrisch leitfähige Reflexionsfläche des Wegmessraums. Die Reflexionsfläche kann aber auch lediglich durch eine Oberflächenbeschichtung aus elektrisch leitfähigem Material bereitgestellt werden. Die Reflexionsfläche ist derart ausgebildet, dass auf den Endflächen des Läufers, die den Wegmessraum begrenzen, ebenfalls ein elektrisch leitfähiges Material aufgebracht ist. Neben der Ausbildung als Metallrohr bzw. Oberflächenbeschichtung kann aber auch ein Hohlkörper vorgesehen sein, der den Wegmessraum in einer von der rohrartigen Gestalt abweichenden Form begrenzt. Dieser Hohlkörper wäre dann an die durch die Antriebsmittel bzw. die Gehäusewand gebildeten Wegmessraum anzupassen.

Der Mikrowellensender ist innerhalb des Gehäuses angeordnet und so ausgerichtet, dass die davon ausgesendeten Mikrowellen auf die Endflächen des Läufers gerichtet sind, und auch der Mikrowellensensor kann innerhalb des Gehäuses angeordnet sein, um die von den Endflächen des Läufers reflektierten Mikrowellen zu erfassen. Bevorzugt ist der Mikrowellensensor mit dem Mikrowellensender integriert ausgebildet. Dadurch lässt sich das Sende-/Empfangsmodul in den engen Wegmessraum innerhalb eines Patronenlinearmotors leicht integrieren. Ein derartiges Sende-/Empfangsmodul könnte auch nachträglich in bereits vorhandene Patronenlinearmotoren integriert werden. Die Endflächen des Läufers, auf die die Mikrowellen durch die Ausrichtung des Mikrowellensensors auftreffen, sind bevorzugt planar ausgebildet. Dadurch werden die Mikrowellen wieder zurück zum Sende-/Empfangsmodul reflektiert. Wenn alternativ der Mikrowellensensor eine vom Mikrowellensender abweichende Position innerhalb des Gehäuses des elektrodynamischen Direktantriebs aufweist, kann die Endfläche des Läufers auch eine entsprechende Oberflächengestaltung aufweisen, sodass die reflektierten elektromagnetischen Mikrowellen zum Sensor hin reflektiert werden.

Der Wegmessraum innerhalb des Gehäuses ist beispielsweise durch ein elektrisch leitfähiges Metallrohr an der Innenseite des Spulensystems und durch die quasi planare Endfläche des Läufers ausgebildet, so dass die Reflexion der Mikrowellen in einer linearen Richtung vom Mikrowellensender zur Endfläche des Läufers und zurück zum Mikrowellensensor erfolgen kann. Durch die Laufzeitmessungen der Wellenlaufzeit wird eine exakte Absolut-Positionserfassung des Läufers möglich.

Der Mikrowellensender und der -sensor sind derart ausgebildet, dass sie in einem Frequenzbereich von 1 bis 60 GHz arbeiten. Mikrowellen gemäß dieser Beschreibung betreffen mindestens einen Frequenzbereich von 1 bis 60 GHz.

Das elektrisch leitende Oberflächenmaterial an den Innenflächen des Wegmessraums und/oder an der Oberfläche der Antriebsmittel ist eine metallische Beschichtung oder eine metallische Schirmungsfläche. Die metallische Beschichtung oder die Schirmungsfläche weisen bevorzugt Aluminium- oder Nickel-Bestandteile auf. Es ist dabei beispielsweise ein Hohlleiter vorgesehen, der den Wegmessraum begrenzt und aus einer Nickellegierung besteht oder mit einer Nickel-Oberflächenschicht beschichtet ist. Andererseits kann aber auch durch einen Hohlleiter aus Aluminiumprofil, der um den beweglichen Läufer und innerhalb des Gehäuses vorgesehen ist, ebenfalls ein elektrisch leitfähiger Wegmessraum vorgesehen sein, der die Mikrowellen in Reflexionsrichtung zum Mikrowellensensor hin reflektiert.

Bei einer Weiterbildung der Erfindung ist die metallische Reflexionsfläche ein Hohlleiter oder dünnwandiges Metallrohr, welches die Antriebsmittel an der Oberfläche zum Wegmessraum abschirmt und dabei die elektromagnetische Kopplung des Direktantriebs für den Vortrieb des Läufers zulässt. Insbesondere bildet der Hohlleiter oder das dünnwandige Metallrohr gleichzeitig eine Gleitbuchse für den Läufer, wodurch dieser auf der Oberfläche des anderen Antriebsmittels in Längsrichtung des Gehäuses gleitend verfahrbar ist.

Der Mikrowellensensor erfasst bevorzugt die absolute Position des Läufers innerhalb des Gehäuses und ist mit einer elektrischen bzw. elektronischen Auswerteeinheit gekoppelt, um die Position für eine Steuerung bzw. Regelung des Direktantriebs auszuwerten. Der Mikrowellensensor ermöglicht die Abstandsmessung des Läufers relativ zum Mikrowellensensor, und bei Kenntnis der gesamten Verschiebungsstrecke des Läufers kann die absolute Position des Läufers eindeutig bestimmt werden. Dadurch lässt sich auch die Position des am Läufer befestigten Bauteils bestimmen, was auf einfache Weise auch zur Ansteuerung oder zur Regelung der Position des Bauteils verwendet werden kann.

Bei einer Weiterbildung der Erfindung ist der Läufer als Permanentmagnet ausgebildet und auf einem Stator mit koaxial aufeinander folgenden Spulen linear bewegbar. Auf den Spulenwicklungen ist eine Gleitoberfläche für den Läufer vorgesehen, die gleichzeitig einen Teil der metallischen Reflexionsfläche für den Wegmessraum bereitstellt. Wenn beispielsweise der elektrodynamische Direktantrieb in einer Patronenausführung ausgebildet ist, kann dieser in besonders klein bauender Weise ausgebildet sein. Das Gehäuse selbst bildet dabei einen Eisenrückschluss, innerhalb dessen die Spulenwicklungen auf einem elektrisch leitfähigen Spulenträger angeordnet sind.

Innen auf der Spulenfläche ist eine Reflexionsfläche für den Wegmessraum vorgesehen.

Bei einer alternativen Weiterbildung der Erfindung ist der Läufer mittels mehrerer axial gewickelter Spulenwicklungen oder mit mehreren koaxial angeordneten Spulen bestückt. Der Läufer ist auf einem längsgerichteten Stator beweglich gelagert, um in Längsrichtung des Gehäuses verfahrbar zu sein. Der Stator weist mehrere, in Längsrichtung des Gehäuses koaxial angeordnete Magneten auf, so dass der Läufer nach elektrischer Stromversorgung gegenüber dem Stator verfahrbar ist.

Bei dieser Weiterbildung ist der Wegmessraum zwischen der Oberfläche des Stators und der Innenfläche des Gehäuses und den Endflächen von Gehäuse und dem Läufer gebildet. Insbesondere auf dem magnetischen Stator, der ein Teil des Antriebsmittels ist, muss entweder ein elektrisch leitfähiger Hohlkörper oder eine elektrisch leitfähige Oberfläche aufgebracht sein, um eine Reflexionsfläche für die Mikrowellen auszubilden. Zusätzlich ist auf der Endfläche des Läufers eine elektrisch leitfähige Oberfläche vorgesehen. Es kann aber auch vorgesehen sein, dass der Läufer selbst elektrisch leitfähig ist, wodurch keine zusätzliche Oberfläche auf dem Läufer im Bereich der Endfläche aufgebracht werden muss.

Es ist lediglich gemäß der vorliegenden Erfindung sicherzustellen, dass die Oberflächen des Wegmessraums aus elektrisch leitfähigen Materialien bestehen oder mit elektrisch leitfähigen Reflexionsflächen bestückt sind. Dadurch wird eine Wegmessung mittels elektromagnetischer Wellen, insbesondere mittels Mikrowellen, nicht störend beeinflusst, da die elektromagnetischen Wellen zum Wegmess-Sensor hin reflektiert werden.

Mehrere Ausführungsformen der Erfindung sind in den Ansprüchen und der folgenden Beschreibung dargestellt, es zeigen, jeweils in schematischer Darstellung:
- Fig. 1: einen elektrodynamischen Direktantrieb mit einem permanentmagnetischen Läufer und einem Mikrowellen-sensor zur Positionsbestimmung des Läufers nach einer ersten Alternative der vorliegenden Erfindung und
- Fig. 2: einen elektrodynamischen Direktantrieb als Linear-motor in Patronenausführung mit einem Mikrowellen-sensor zur Positionsbestimmung des Läufers nach einer zweiten Alternative gemäß der vorliegenden Erfindung.

Der elektrodynamische Direktantrieb ist in einer Ausführung als Linearmotor in Patronenausführung vorgesehen, wobei innerhalb eines Gehäuses 1 ein magnetisch leitfähiger Läufer 2 vorgesehen ist, der innerhalb des Gehäuses 1 axial verlagerbar ist. Für den Linearmotor ist ein aus zwei Teilen bestehendes Antriebssystem 3 vorgesehen, das mehrere, koaxial aufeinanderfolgende Spulen 4 als erstes Teil aufweist. Die Spulen 4 sind auf einem elektrisch leitfähigen Spulenträger 16 angeordnet. Auf der äußeren Seite des Läufers 2 ist ein Permanentmagnet 5 vorgesehen, der das andere der beiden relativ zueinander bewegbaren Antriebsmittel-Teile bereitstellt.

Der Läufer 2 ist mit einem stangenartig ausgebildeten Lastmitnehmer 6 verbunden, um das zu bewegende Bauteil zu verfahren. Der Läufer 2 gleitet in einer längsgerichteten Bewegung innerhalb des Gehäuses 1 auf der inneren Oberfläche des Spulensystems 4, wodurch eine Führung innerhalb des als Stator wirkenden Spulensystems 4 gebildet wird.

Innerhalb des Gehäuses ist ein Mikrowellensender 7 vorgesehen, der Mikrowellen 8 in Richtung einer Endfläche 9 am Läufer 2 aussendet und die von dieser Endfläche 9 reflektiertten Mikrowellen 10 mittels des integrierten Mikrowellensensors 11 erfasst.

Innerhalb des Gehäuses 1 des elektrodynamischen Direktantriebs ist ein Wegmessraum 12 ausgebildet, der durch verschiedene Reflexionsflächen begrenzt ist. Diese Reflexionsflächen sind alle elektrisch leitfähig, also im Falle der permanentmagnetischen Endfläche 9 des Läufers 2 mit einer elektrisch leitenden Oberfläche 13 bedeckt oder durch einen rohrartigen Hohlkörper 14 ausgebildet, der eine elektrostatisch leitende Gleitfläche bildet. Auf dieser Gleitfläche des elektrostatischen Hohlkörpers 14 kann der Läufer 2 gleiten. Das elektrisch leitfähige Material des Hohlkörpers 14 ist derart dünn ausgeführt, dass die elektromagnetische Kopplung zwischen Läufer 2 und dem Spulensystem 4 möglichst wenig gestört ist. Zusätzlich kann noch auf der Endfläche 15 des Gehäuses innenseitig eine elektrisch leitfähige Oberfläche vorgesehen sein, was aber für die Erfindung nicht wesentlich ist.

Der Linearmotor funktioniert folgendermaßen: Wird das Spulensystem 4 über eine elektrische Ansteuerschaltung entsprechend bestromt, setzt sich der Läufer 2 wegen der elektromagnetischen Kopplung zwischen den beiden Antriebsmitteln, das heißt des Spulensystems 4 und des Magnetsystems 5, in Längsrichtung zum Gehäuse 1 in Bewegung. Wird der Stromfluss durch die Spulen 4 umgepolt, bewegt sich der Läufer 2 und damit auch der Lastmitnehmer 6 mit dem daran befestigten Bauteil der Werkzeugmaschine in entgegengesetzte Richtung.

Der Sender 7 sendet die Mikrowellen 8 in Richtung Endfläche 9 des Läufers 2 aus, und die reflektierten Mikrowellen 10 werden im Mikrowellensensor 11 erfasst und in der Regelungs- bzw. Steuerungsschaltung des Linearmotors ausgewertet. Dadurch lässt sich der Linearmotor exakt ansteuern, und die Wegmessung kann automatisch erfolgen.

Der Wegmessraum 12, innerhalb dem sich die Mikrowellen 8, 10 zur Endfläche 9 des Läufers hin und davon wieder weg zum Sensor 11 bewegen, ist gemäß der vorliegenden Erfindung mit elektrisch leitfähigen Oberflächen versehen. Entweder sind die Materialien wie beim Spulensystem 4 bereits aus elektrisch leitfähigem Metall, oder es ist auf der Innenseite des Antriebsmittels ein Hohlkörper 14 vorgesehen, der die elektrische Leitfähigkeit erhöht. Insbesondere ist an der Endfläche 9 des permanentmagnetischen Läufers 2 eine elektrisch leitfähige Oberfläche 13 vorgesehen, wodurch die Mikrowellen 8, 10 nicht in der magnetisch leitfähigen Oberfläche gedämpft werden.

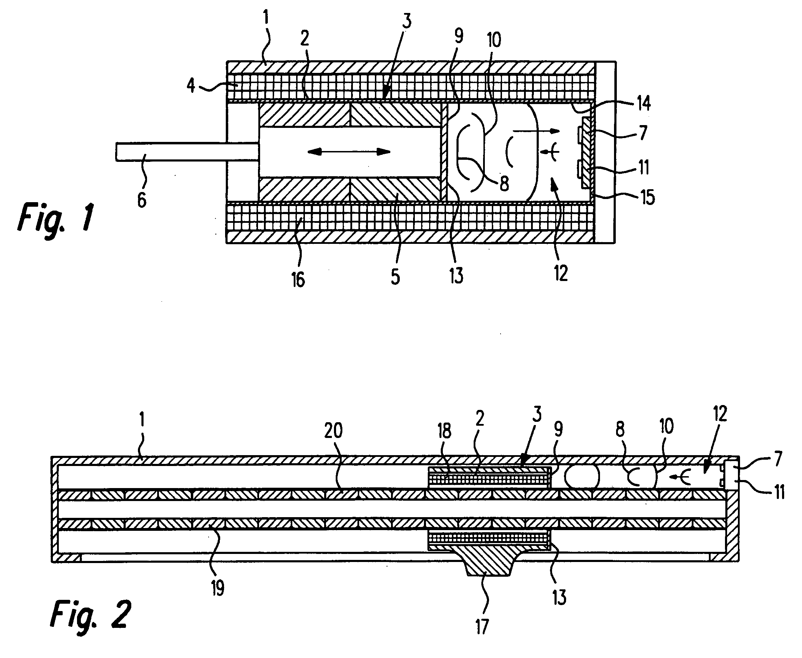

In Fig. 2 ist ein weiterer elektrodynamischer Direktantrieb in Form eines Linearmotors mit einem beweglichen Läufer 2 dargestellt, der über einen Lastmitnehmer 17 mit einem verfahrbaren Bauteil gekoppelt ist. Das Antriebsmittel 3 des Läufers 2 ist eine auf einen Spulenträger des Läufers 2 gewickelte Spule 18, die elektrisch ansteuerbar ist. Der Läufer 2 gleitet auf einem Stator 19 mit darauf koaxial angeordneten Permanentmagneten. Das Gehäuse 1 ist aus einem elektrisch leitfähigen Material hergestellt, welches einen Eisenrückschluss bildet.

Innerhalb des Gehäuses 1 ist der Mikrowellensender 7 zur Aussendung der Mikrowellen 8 in Richtung der Endfläche 9 des Läufers 2 vorgesehen, und die Mikrowellen 10 werden von der Endfläche 9 des Läufers 2 zum Mikrowellensensor 11 reflektiert. Auf diese Weise lässt sich die absolute Position des Läufers 2 innerhalb des Gehäuses 1 exakt messen. Da der Stator 19 mit koaxialen Permanentmagneten versehen ist, ist über diesem eine elektrisch leitfähige Oberfläche vorgesehen, die beispielsweise durch eine dünne Beschichtung aus elektrisch leitfähigem Material 20 besteht. Alternativ kann hier auch ein über dem Stator 19 angeordnetes Aluminiumrohr als elektrisch leitfähige Oberfläche dienen. Die Endfläche 9 des Läufers 2 kann ebenfalls mit einer elektrisch leitfähigen Schicht 13 versehen sein. Da das Gehäuse 1 selbst aus elektrisch leitfähigem Material besteht, ist die Oberfläche elektrisch leitfähig, so dass hier keine zusätzliche Maßnahme erforderlich ist.

Durch die Ausbildung des Wegmessraums 12 mit den elektrisch leitfähigen Oberflächen kann der Mikrowellensensor ohne übermäßige Dämpfung oder Störung arbeiten und eine exakte Position des Läufers 2 messen. Dadurch lässt sich ein MikrowellenWegmesssystem erstmals effektiv bei einem elektrodynamischen Direktantrieb mit permanentmagnetischem Antriebsmittel einsetzen.

## Patentansprüche

1. Elektrodynamischer Direktantrieb mit einem innerhalb eines Gehäuses (1) verfahrbaren Läufer (2), der relativ zum Gehäuse (1) durch ein Antriebssystem bewegbar ist, welches zwei antriebsmäßig zusammenwirkende, relativ zueinander bewegbare Antriebsmittel in Gestalt eines mindestens eine Spule (4, 18) enthaltenden Spulensystems und mindestens einen Permanentmagnet (5, 19) enthaltenden Magnetsystems aufweist, um einen mit dem Läufer (2) gekoppelten Lastmitnehmer (6, 17) zu bewegen, **dadurch gekennzeichnet, dass** ein Wegmessraum (12) durch eine Endfläche (13) des verfahrbaren Läufers (2) und die Wände des Gehäuses (1) und/oder die Oberfläche (14, 20) der innenliegenden Antriebsmittel (19) gebildet ist, dass ein Sensor (11) die Position des Läufers (2) innerhalb des Gehäuses (1) mittels elektromagnetischer Wellen (8, 10) erfasst, wobei die Entfernung des Läufers (2) zum Sensors (11) aufgrund der Laufzeit der elektromagnetischen Wellen (8, 10) messbar ist, und dass die Endfläche (9) des Läufers (2) und die Innenfläche (14, 20) des Wegmessraums (12) ein elektrisch leitfähiges Oberflächenmaterial aufweisen, um eine Reflexionsfläche für eine optimale Messfunktion des Sensors (11) zu gewährleisten.

2. Direktantrieb nach Anspruch 1, **dadurch gekennzeichnet, dass** ein Mikrowellensender (7) innerhalb des Gehäuses (1) angeordnet und so ausgerichtet ist, dass die davon ausgesendeten Mikrowellen (8) auf die Endfläche (9) des Läufers (2) gerichtet sind, und dass der Mikrowellensensor (11) innerhalb des Gehäuses (1) angeordnet ist, um die von der Endfläche (9) des Läufers (2) reflektierten Mikrowellen (10) zu erfassen.

3. Direktantrieb nach einem der vorhergehenden Ansprüche, **dadurch gekennzeichnet, dass** der Mikrowellensensor (11) mit dem Mikrowellensender (7) integriert ausgebildet ist.

4. Direktantrieb nach einem der vorhergehenden Ansprüche, **dadurch gekennzeichnet, dass** der Mikrowellensender (7) in einem Frequenzbereich von 1 bis 60 GHz arbeitet.

5. Direktantrieb nach Anspruch 1 oder 2, **dadurch gekennzeichnet, dass** das elektrisch leitfähige Oberflächenmaterial an den Innenflächen des Wegmessraums (12) und/oder der Oberfläche (14, 20) des Antriebsmittels (4, 19) eine metallische Beschichtung oder eine metallische, elektrisch leitfähige Beschichtung oder eine derartige Reflexionsfläche ist.

6. Direktantrieb nach Anspruch 1 oder 5, **dadurch gekennzeichnet, dass** die metallische, elektrisch leitfähige Beschichtung oder die Reflexionsfläche Aluminium- oder Nickel-Bestandteile aufweisen.

7. Direktantrieb nach Anspruch 1 oder 5, **dadurch gekennzeichnet, dass** die metallische Reflexionsfläche ein Hohlleiter oder ein dünnwandiges Metallrohr ist, welches die Antriebsmittel (4, 19) an der Oberfläche zum Wegmessraum (12) abschirmt und dabei die elektromagnetische Kopplung des Antriebssystems (3) für den Vortrieb des Läufers (2) zulässt.

8. Direktantrieb nach einem der vorhergehenden Ansprüche, **dadurch gekennzeichnet, dass** der Mikrowellensensor (11) die absolute Position des Läufers (2) innerhalb des Gehäuses (1) erfasst und mit einer elektrischen Auswerteeinheit gekoppelt ist, um die Position für eine Steuerung bzw. Regelung des Antriebssystems (3) auszuwerten.

9. Direktantrieb nach einem der vorhergehenden Ansprüche, **dadurch gekennzeichnet, dass** der Läufer (2) einen Permanentmagnet (5) aufweist und auf dem Stator mit den koaxial aufeinanderfolgenden Spulen (4) linear bewegbar ist und wobei auf den Spulenwicklungen eine Gleitoberfläche (14) für den Läufer (2) angeordnet ist, die gleichzeitig ein Teil der metallischen Reflexionsfläche für den Wegmessraum (12) bildet.

10. Direktantrieb nach einem der vorhergehenden Ansprüche, **dadurch gekennzeichnet, dass** der Läufer (2) mehrere axial gewickelte Spulenwicklungen (18) aufweist, um auf einem aus mehreren, in Längsrichtung des Gehäuses (1) angeordneten Magneten gebildeten Stator (19) geführt zu sein, und dass der Wegmessraum (12) zwischen dem Stator (19) und den Innenwänden des Gehäuses (1) gebildet ist.

## Claims

1. Electrodynamic direct drive with a rotor (2) capable of moving inside a housing (1), which can be moved relative to the housing (1) by means of a drive system, which has two drive-interacting drive means capable of being moved relative to one another in a combined arrangement of a coil system containing at least one coil (4, 18) and a magnet system containing at least one permanent magnet (5, 19), in order to move a load driver (6, 17) coupled to the rotor (2), **characterised in that** a path measuring space (12) is formed by an end surface (13) of the movable rotor (2) and the walls of the housing (1) and/or the surface (14, 20) of the drive means (19) located on the inside, **in that** a sensor (11) acquires the position of the rotor (2) inside the housing (1) by means of electromagnetic waves (8, 10), wherein the distance of the rotor (2) from the sensor (11) can be determined on the basis of the run time of the electromagnetic waves (8, 10), and **in that** the end surface (9) of the rotor (2) and the inner surface (14, 20) of the path measuring space (12) have an electrically conductive surface material, in order to guarantee a reflection surface for an optimum measurement function of the sensor (11).

2. Direct drive according to Claim 1, **characterised in that** a microwave transmitter (7) is arranged inside the housing (1) and aligned in such a way that the microwaves (8) which are emitted from it are directed onto the end surface (9) of the rotor (2), and **in that** the microwave sensor (11) is arranged inside the housing (1) in order to acquire the microwaves (10) reflected from the end surface (9) of the rotor (2).

3. Direct drive according to any one of the preceding claims, **characterised in that** the microwave sensor (11) is designed to be integrated with the microwave transmitter (7).

4. Direct drive according to any one of the preceding claims, **characterised in that** the microwave transmitter (7) operates in a frequency range from 1 to 60 GHz.

5. Direct drive according to Claim 1 or 2, **characterised in that** the electrically conductive surface material on the inner surfaces of the path measuring space (12) and/or the surface (14, 20) of the drive means (4, 19) is a metallic coating or a metallic, electrically-conductive coating, or a reflection surface of this kind.

6. Direct drive according to Claim 1 or 5, **characterised in that** the metallic, electrically conductive coating or the reflection surface has aluminium or nickel constituents.

7. Direct drive according to Claim 1 or 5, **characterised in that** the metallic reflection surface is a hollow conductor or a thin-walled metal tube, which screens the drive means (4, 19) at the surface to the path measuring space (12), and in this context the electromagnetic coupling of the drive system (3) allows for the forward drive of the rotor (2).

8. Direct drive according to any one of the preceding claims, **characterised in that** the microwave sensor (11) acquires the absolute position of the rotor (2) inside the housing (1) and is coupled to an electrical evaluation unit in order to evaluate the position for controlling or regulating the drive system (3).

9. Direct drive according to any one of the preceding claims, **characterised in that** the rotor (2) has a permanent magnet (5) and is capable of linear movement on the stator by means of the coaxially sequential coils (4), and wherein a sliding surface (14) for the rotor is arranged on the coil windings, which simultaneously forms a part of the metallic reflection surface for the path measuring space (12).

10. Direct drive according to any one of the preceding claims, **characterised in that** the rotor (2) has a plurality of axially wound coil windings (18) in order to be guided on a stator (19) formed from a plurality of magnets arranged in the longitudinal direction of the housing (1), and **in that** the path measuring space (12) is formed between the stator (19) and the inner walls of the housing (1).

## Revendications

1. Entraînement direct électrodynamique avec un induit (2) mobile à l'intérieur d'un boîtier (1), déplaçable relativement au boîtier (1) au moyen d'un système d'entraînement comportant deux moyens d'entraînement coopérants en entraînement, déplaçables l'un relativement à l'autre sous la forme d'un système de bobine comprenant au moins une bobine (4, 18) et d'un système d'aimant comprenant au moins un aimant permanent (5, 19), pour déplacer un entraîneur de charge (6, 17) accouplé à l'induit (2), **caractérisé en ce qu'**une chambre de mesure de course (12) est formée par une surface terminale (13) de l'induit mobile (2) et les parois du boîtier (1) et/ou la surface (14, 20) des moyens d'entraînement (19) intérieurs, **en ce qu'**un capteur (11) saisit la position de l'induit (2) à l'intérieur du boîtier (1) au moyen d'ondes électromagnétiques (8, 10), la distance de l'induit (2) au capteur (11) étant mesurable à partir du temps de propagation des ondes électromagnétiques (8, 10), et **en ce que** la surface terminale (9) de l'induit mobile (2) et la surface intérieure (14, 20) de la chambre de mesure de course (12) présentent un matériau de surface électriquement conducteur pour assurer une surface réfléchissante en vue d'une fonction de mesure optimale du capteur (11).

2. Entraînement direct selon la revendication 1, **caractérisé en ce qu'**un émetteur à micro-ondes (7) est disposé à l'intérieur du boîtier (1) et orienté de manière que les micro-ondes (8) émises par celui-ci soient dirigées vers la surface terminale (9) de l'induit (2), et **en ce que** le capteur à micro-ondes (11) est disposé à l'intérieur du boîtier (1) pour saisir les micro-ondes (10) réfléchies par la surface terminale (9) de l'induit (2).

3. Entraînement direct selon l'une des revendications précédentes, **caractérisé en ce que** le capteur à micro-ondes (11) est intégré à l'émetteur à micro-ondes (7).

4. Entraînement direct selon l'une des revendications précédentes, **caractérisé en ce que** l'émetteur à micro-ondes (7) fonctionne dans une plage de fréquences de 1 à 60 GHz.

5. Entraînement direct selon la revendication 1 ou 2, **caractérisé en ce que** le matériau de surface électriquement conducteur sur les surfaces intérieures de la chambre de mesure de course (12) et/ou à la surface (14, 20) du moyen d'entraînement (4, 19) est un revêtement métallique ou un revêtement métallique électriquement conducteur ou une surface réfléchissante analogue.

6. Entraînement direct selon la revendication 1 ou 5, **caractérisé en ce que** le revêtement métallique électriquement conducteur ou la surface réfléchissante comprennent des composants aluminium ou nickel.

7. Entraînement direct selon la revendication 1 ou 5, **caractérisé en ce que** la surface métallique réfléchissante est un conducteur creux ou un tube métallique à paroi mince blindant les moyens d'entraînement (4, 19) sur la surface vers la chambre de mesure de course (12) et permettant en l'occurrence le couplage électromagnétique du système d'entraînement (3) pour l'avance de l'induit (2).

8. Entraînement direct selon l'une des revendications précédentes, **caractérisé en ce que** le capteur à micro-ondes (11) saisit la position absolue de l'induit (2) à l'intérieur du boîtier (1) et est couplé à une unité d'évaluation électrique pour évaluer la position en vue d'une commande ou d'une régulation du système d'entraînement (3).

9. Entraînement direct selon l'une des revendications précédentes, **caractérisé en ce que** l'induit (2) comprend un aimant permanent (5) et est déplaçable linéairement sur le stator avec les bobines (4) se succédant coaxialement, une surface de glissement (14) pour l'induit (2) étant prévue sur les enroulements de bobine, laquelle forme simultanément une partie de la surface métallique réfléchissante pour la chambre de mesure de course (12).

10. Entraînement direct selon l'une des revendications précédentes, **caractérisé en ce que** l'induit (2) comprend plusieurs enroulements (18) de bobine enroulés axialement, pour être guidé sur un stator (19) formé de plusieurs aimants disposés dans le sens longitudinal du boîtier (1), et **en ce que** la chambre de mesure de course (12) est formée entre le stator (19) et les parois intérieures du boîtier (1).
